Europäisches Patentamt

European Patent Office

Office européen des brevets

(11) Veröffentlichungsnummer: **0 019 931**
A1

## EUROPÄISCHE PATENTANMELDUNG

(21) Anmeldenummer: 80103051.1

(22) Anmeldetag: 31.05.80

(51) Int. Cl.³: **A 47 J 42/04**, A 47 J 42/38

(30) Priorität: 02.06.79 DE 2922656

(71) Anmelder: STETNER & CO., Hersbrucker Strasse 22, D-8560 Lauf a.d. Pegnitz (DE)

(43) Veröffentlichungstag der Anmeldung: 10.12.80 Patentblatt 80/25

(72) Erfinder: Winkler, Hans, Eigenheimstrasse 8, D-8505 Röthenbach/Pegn. (DE)
Erfinder: Loos, Manfred, Am Steinberg 25, D-8561 Reichenschwand (DE)
Erfinder: Messerschmidt, Wilfried, Karlsruher Strasse 15, D-7730 VS-Villingen (DE)

(84) Benannte Vertragsstaaten: CH FR GB IT LI SE

(54) Haushaltsmühle, insbesondere für Getreide.

(57) Die Patentanmeldung betrifft eine Haushaltsmühle, insbesondere zum Mahlen von Getreide, mit einem beweglichen und einem unbeweglichen Mahlwerksteil (5, 6). Das gesamte Mahlwerk (5, 6), gegebenenfalls einschließlich einer Zuführung (2) und einer Förderschnecke (3) für das Mahlgut besteht bzw. bestehen je aus einem einheitlichen Körper aus dichtgesinterter Keramik hoher Verschleißfestigkeit.

ACTORUM AG

EP 0 019 931 A1

-1-

## Haushaltsmühle, insbesondere für Getreide

Die Erfindung bezieht sich auf eine Haushaltsmühle, insbesondere für Getreide, mit einem aus einem umlaufenden Mahlwerkskörper und einem unbeweglichen Mahlwerksteil bestehenden Mahlwerk.

Eine derartige Haushaltsmühle ist beispielsweise bekannt aus dem DE-GM 75 16 659. Bei diesem kann das Mahlgehäuse und/oder Mahlwerk aus einem wärmeleitendem Werkstoff bestehen. Bei im Handel befindlichen Vorrichtungen der genannten Art besteht das Mahlwerk aus Eisen oder aus gehärtetem Stahl. Diese sind im Betrieb, besonders bei Einstellung auf eine sehr feine Mahlstufe, mehr oder weniger starker Abnutzung unterworfen. Der Abrieb vermischt sich dabei mit dem gemahlenen Gut und kann unter Umständen gesundheitliche oder geschmackliche Nachteile mit sich bringen. Dies kann einmal bedingt sein durch den Abrieb selbst, oder der Abrieb reagiert mit dem Mahlgut und bedingt geschmackliche oder gesundheitlich nicht unbedenkliche Verbindungen, zumal bei den Haushalts-

-2-

mühlen wegen der geringen Abmessungen des Mahlwerks bei Haushaltsmühlen relativ hohe Temperaturen im Bereich des Mahlwerkes auftreten können.

Mit der vorliegenden Erfindung soll daher die Aufgabe gelöst werden, eine Haushaltsmühle mit einem Mahlwerk so auszubilden, daß ein Abrieb des Mahlwerkes niedrig gehalten wird und der Abrieb keinerlei gesundheitlich negative Wirkungen auf das Mahlgut oder das gemahlene Gut bewirken kann.

Erfindungsgemäß wird dadurch erreicht, daß sowohl der Mahlwerkskörper als auch der Mahlwerksteil als je ein in seiner Gesamtheit aus dichtgesinterter Keramik hoher Verschleißfestigkeit bestehender einheitlicher Körper ausgebildet ist. Durch die Verwendung von dichtgesinterter Keramik mit hoher Verschleißfestigkeit wird einmal erreicht, daß der Abrieb keinerlei nachteiligen Einfluß auf die Gesundheit der Benutzer der damit gemahlenen Lebensmittel auswirkt, da die üblichen geeigneten keramischen Metalloxide nicht toxisch wirken und außerdem kann die Lebensdauer des Mahlwerks erhöht werden, ohne daß teuere vergütete Stähle verwendet werden müssen. Ein weiterer Vorteil besteht darin, daß die Keramik keine Verbindungen mit aggresiven Anteilen des Mahlgutes, z.B. ätherischen Ölen, etc. eingeht und daher geschmacksneutral ist.

0019931

-3-

Es ist zwar bereits aus der DE-PS 46 993 bekannt, bei Müllerei-Maschinen die Mahlkörper des Mahlwerks aus einzelnen Segmenten aus z.B. Porzellan herzustellen. Die einzelnen Segmente sind mittels Schrauben an einer Scheibe befestigt. Diese Schrauben sind beim Mahlen dem Verschleiß ausgesetzt. Da sie wegen der notwendigen Festigkeit aus Stahl bestehen müssen, kann es zu den durch die Erfindung zu vermeidenden Nachteilen kommen.

Weiterhin ist es auch schon aus der DE-OS 16 07 612 bekannt, für Mahlscheiben zum Mahlen von z.B. Kakao oder Farbe Reibmahlscheiben aus schleifscheibenähnlichem Material zu verwenden, die wegen der hohen Umfangsgeschwindigkeiten auf einem Mahlscheibenträger aus legiertem Stahl montiert sind. Wegen der unterschiedlichen Wärmeausdehnung der beiden Materialien sind hierbei Vorkehrungen in Form von speziellen Fliehkraftgewichten getroffen, die gegen den Umfang der Reibmahlscheibe drücken und so deren Zerstörung durch die Zentrifugalkräfte verhindern sollen.

Auch ist es aus der DE-AS 10 19 530 bekannt, ein Mahlwerk aus zwei Paar konzentrisch zueinander angeordneten Mahlscheiben herzustellen. Dabei darf das innere, der Grobzerkleinerung dienende Paar nicht aus gesintertem Material bestehen, da sonst durch enthaltene Fremdkörper ein Absplittern der inneren Mahlringe befürchtet wird. Deshalb wird dort vorgeschlagen, das innere Paar aus Stahl und das äußere Paar aus gesintertem Material, z.B. Carborundum, herzustellen.

Schließlich ist es aus der DE-AS 10 20 861 bekannt, bei einer Mahlvorrichtung zum Erzeugen von Holzschliff das Mahlwerk aus auf Trägern aufgebrachten Sektoren aus einer keramischen Schleifmasse, z.B. keramisch gebundenem Korund, Siliciumkarbid, Korund, etc. herzustellen und diese miteinander zu verkitten. Diese Befestigungsart kann hier verwendet werden, weil wegen des Naßschliffes keine hohen Temperaturen beim Mahlvorgang auftreten.

Die Anwendung der bei Industrie-Mahlwerken bekannten Maßnahmen auf eine Haushaltsmühle ist unzweckmäßig, da einer Hausfrau ein Auswechseln von Segmenten nicht zugemutet werden kann. Auch ist es dem für Hausgeräte zuständigen Fachmann, ohne erfinderische Überlegungen anzustellen, nicht möglich, zum Gegenstand der Erfindung zu gelangen, zumal in der DE-AS von der Verwendung von gesintertem Material für eine Grobzerkleinerung abgeraten wird. Dieses Vorurteil trifft für Haushaltsmahlwerke um so mehr zu, als dort ein Absplittern normalerweise nicht festgestellt wird, da eine Nachbehandlung, z.B. ein Siebvorgang, nicht zugemutet werden kann.

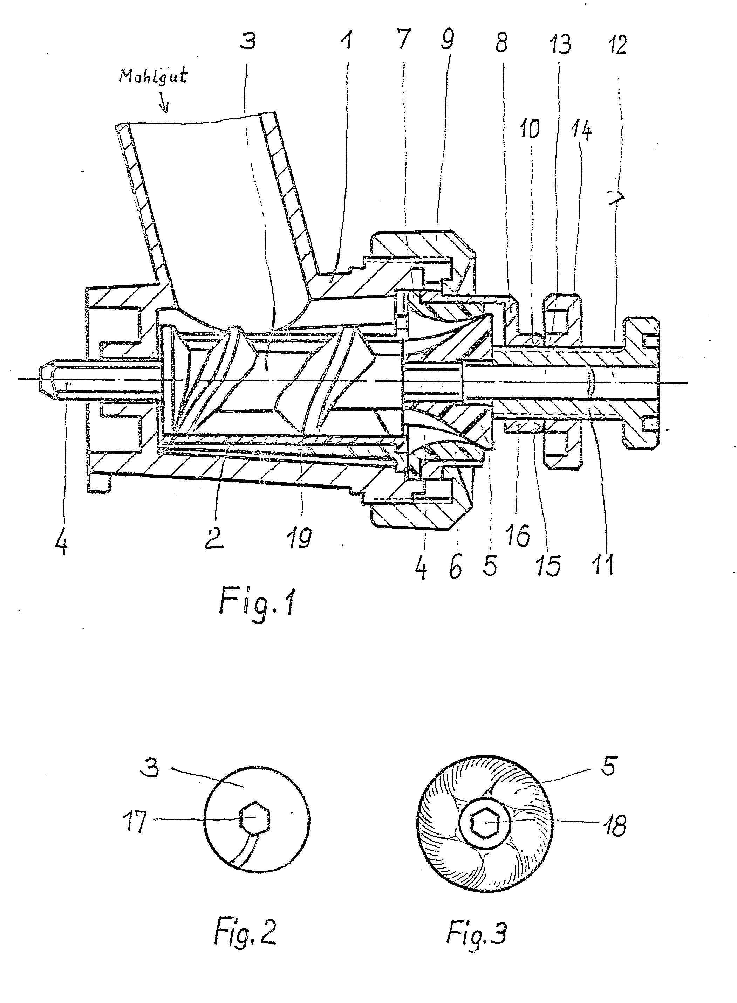

Weitere vorteilhafte Einzelheiten der Erfindung sind nachfolgend anhand eines in der Zeichnung

-7-

ligen Eigenschaften in Bezug auf die geforderten Eigenschaften der Keramik ausüben und keine toxische Wirkung zeigen. Zu vermeiden sind daher Bindemittel mit störenden Anteilen an z.B. Natrium, Kalium, Barium, Eisen, Blei und Beryllium. Besonders vorteilhaft ist die Verwendung von dichtgesinterter Keramik mit mehr als 90 %, insbesondere mehr als 94 % Aluminiumoxid und Ton oder einem Magnesium-Aluminium-Silikat als Bindemittelzuschläge.

Anstelle oder zuzüglich zu den genannten Metalloxiden kann die Keramik auch wenigstens ein Metallborid und/oder Metallkarbid und/oder Metallnitrid enthalten oder aus diesem bzw. diesen bestehen.

Vorzugsweise können solche Keramikbestandteile ausgewählt werden, die eine gute Wärmeleitfähigkeit besitzen, also insbesondere Aluminiumoxid und Magnesiumoxid.

Gemäß einer vorteilhaften Weiterbildung der Erfindung kann der unbewegliche Mahlwerksteil 6 mit Kunststoff umspritzt sein. Beim Ausführungsbeispiel kann er beispielsweise zweckmäßig mit der Lagerschale 8 eine bauliche Einheit bilden, wenn ein glockenförmiges Mahlwerk 5, 6 verwendet wird. Hierdurch ist es gegen Schlag von außen besser geschützt.

-8-

In weiterer zweckmäßiger Ausgestaltung der Erfindung ist auch die Zuführung 2 und vorzugsweise auch die Förderschnecke 3 aus dichtgesinterter Keramik der vorgenannten Arten hergestellt. Gegebenenfalls kann die Verschleißfestigkeit dieser Teile geringer sein als die des Mahlwerks 5, 6. Beispielsweise kann hier ein geringerer Prozentsatz vor allem z.B. der schwer dichtsinternden Bestandteile der Keramik verwendet werden, sodaß diese Teile preiswerter hergestellt werden können und trotzdem noch die geforderten Bedingungen erfüllen. Beispielsweise kann bei Verwendung von Aluminiumoxid deren Anteil 85 bis 94 % und derjenige des Mahlwerks 5, 6 kann 95 bis 98 % betragen. Die Prozentangaben sind dabei immer als Gewichtsprozente zu verstehen.

Zweckmäßig kann die Zuführung 2 mit einer Kunststoffumhüllung 19 versehen, insbesondere mit dieser umspritzt sein und als eine bauliche Einheit in das Gehäuse 1 eingesetzt werden. Bei Verwendung eines Kunststoffgehäuses 1 kann dieses um die Zuführung 2 gespritzt sein, also Gehäuse 1 und Zuführung 2 ein einziges Bauteil bilden.

Gemäß einer anderen zweckmäßigen Ausgestaltung der Erfindung kann das Gehäuse 1 und die Zuführung 2 zu einem einzigen keramischen Bauelement kombiniert sein, d.h. einstückig aus dichtgesinterter Keramik hoher Verschleißfestigkeit bestehen.

-9-

Besonders zu beachten ist, daß die beim Erfindungsgegenstand angewandte Keramik dichtgesintert ist. Hierdurch wird vermieden, daß
diese Feuchtigkeit aufnehmen kann, sodaß die
Teile leicht gereinigt werden können und der
Befall mit Bakterien vermieden wird oder zumindest sehr gering bleibt.

0019931

-10-

Patentansprüche

1. Haushaltsmühle, insbesondere für Getreide,
mit einem aus einem umlaufenden Mahlwerkskörper (5) und einem unbeweglichen Mahlwerksteil (6) bestehenden Mahlwerk (5, 6), dadurch
gekennzeichnet, daß sowohl der Mahlwerkskörper
(5) als auch der Mahlwerksteil (6) als je ein
in seiner Gesamtheit aus dichtgesinterter Keramik hoher Verschleißfestigkeit ausgebildet
ist.

2. Haushaltsmühle nach Anspruch 1, dadurch gekennzeichnet, daß das Mahlgut dem Mahlwerk
(5, 6) in an sich bekannter Weise über eine
Zuführung (2) und/oder eine in dieser vorgesehenen Förderschnecke (3) zuführbar ist und
daß die Zuführung (2) und/oder die Förderschnecke (3) aus dichtgesinterter Keramik
hoher Verschleißfestigkeit besteht.

3. Haushaltsmühle nach Anspruch 1 und 2, dadurch
gekennzeichnet, daß das Mahlwerk (5, 6) aus
einer Keramik besteht, deren Verschleißfestigkeit größer ist als die der Zuführung (2) und/
oder der Förderschnecke (3).

4. Haushaltsmühle nach einem der Ansprüche 1
bis 3, dadurch gekennzeichnet, daß das Gehäuse
(1) mit der Zuführung 2 eine bauliche Einheit

-11-

bildet und aus dichtgesinterter Keramik hoher Verschleißfestigkeit besteht.

5. Haushaltsmühle nach einem der Ansprüche 1 bis 3, dadurch gekennzeichnet, daß die aus Keramik hoher Verschleißfestigkeit bestehende Zuführung (2) mit Kunststoff umspritzt ist.

6. Haushaltsmühle nach einem der Ansprüche 1 bis 3, dadurch gekennzeichnet, daß die aus Keramik hoher Verschleißfestigkeit bestehende Zuführung (2) mit dem aus Kunststoff bestehendem Gehäuse (1) umspritzt ist.

7. Haushaltsmühle nach einem der Ansprüche 1 bis 6, dadurch gekennzeichnet, daß das feststehende Mahlwerksteil (6) außem mit Kunststoff umspritzt ist und diese Einheit als gesondertes Bauelement in das Gehäuse (1) einsetzbar ist.

8. Haushaltsmühle nach einem der Ansprüche 1 bis 7, dadurch gekennzeichnet, daß die Keramik hoher Verschleißfestigkeit für das Mahlwerk (5, 6) und gegebenenfalls die Förderschnecke (3) und die Zuführung (2) bzw. das Gehäuse (1) aus wenigstens einem der Oxide von Aluminium, Magnesium, Chrom, Titan, Zirkon, Silizium und/oder wenigstens einem Spinell besteht oder im wesentlichen aus diesem bzw. diesen besteht.

-12-

9. Haushaltsmühle nach einem der Ansprüche 1
bis 8, dadurch gekennzeichnet, daß die Keramik hoher Verschleißfestigkeit aus wenigstens einem Metallkarbid und/oder Metallborid und/oder Metallnitrid besteht oder
dieses bzw. diese enthält.

10. Haushaltsmühle nach Anspruch 8 oder 9,
dadurch gekennzeichnet, daß die Keramik zu
wenigstens 90 % aus Aluminiumoxid besteht.

11. Haushaltsmühle nach Anspruch 10, dadurch gekennzeichnet, daß die Keramik zu wenigstens
94 % aus Aluminiumoxid besteht.

12. Haushaltsmühle nach einem der Ansprüche 1
bis 11, dadurch gekennzeichnet, daß das Mahlwerk (5, 6) und gegebenenfalls die Förderschnecke (3) und die Zuführung (2) bzw. das
Gehäuse (1) ein bzw. je ein Keramik- Guß-,
Spritzguß- oder Spritzpressteil ist.

3  1  7  9  8  13  12

10  14

Mahlgut

4  2  19

4  6  5  15  11

16

Fig. 1

3

17

Fig. 2

5

18

Fig. 3

Europäisches Patentamt

**EUROPÄISCHER RECHERCHENBERICHT**

001993 1

Nummer der Anmeldung

EP 80 10 3051

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - C - 14 658 (MANEBACHER) <br> * Das ganze Dokument * <br><br> -- | 1,2,4, 12 |
| | DE - C - 703 024 (BEER) <br> * Das ganze Dokument * <br><br> -- | 1,2,4, 12 |
| | FR - A - 2 284 302 (SCHNITZER) <br> * Seite 6; Figur 1 * <br><br> -- | 1,6,12 |
| | DE - A - 2 410 122 (BURGGRABE) <br> * Seite 6, Absatz 2; Seite 13, letzter Absatz * <br><br> -- | 1 |
| A | US - A - 3 376 910 (POPEIL) <br> * Figur 6 * <br><br> -- | 5,6 |
| A | US - A - 3 057 565 (ZWANGER) <br> * Das ganze Dokument * <br><br> -- | 1,2 |
| A | US - A - 1 711 208 (RILLING) <br> * Das ganze Dokument * <br><br> -- | 1 |
| A | FR - A - 1 005 109 (ENGELSMANN) <br> * Das ganze Dokument * <br><br> ---- | 1 |

**KLASSIFIKATION DER ANMELDUNG (Int.Cl. 3)**

A 47 J 42/04
42/38

**RECHERCHIERTE SACHGEBIETE (Int. Cl. 4)**

A 47 J

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie übereinstimmendes Dokument

☒ Der vorliegende Recherchenbericht wurde für alle Patentansprüche erstellt

| Recherchenort | Abschlußdatum der Recherche | Prüfer |
|---|---|---|
| Den Haag | 12-09-1980 | SCHARTZ |

EPA form 1503.1  06.78